# EUROPÄISCHE PATENTSCHRIFT

(11) **EP 1 026 185 B1**
(45) Veröffentlichungstag und Bekanntmachung des Hinweises auf die Patenterteilung: **16.02.2005**
(21) Anmeldenummer: 00101039.6
(22) Anmeldetag: 20.01.2000
(51) Int. Cl.: C08G 18/00, C08G 18/32, C08G 83/00

(54) **Dendrimere und hochverzweigte Polyurethane**
Dendrimers and highly branched polyurethanes
Dendrimères et polyuréthanes hautement ramifiés

(30) Priorität: 04.02.1999 DE 19904444
(43) Veröffentlichungstag der Anmeldung: 09.08.2000
(73) Patentinhaber: BASF AKTIENGESELLSCHAFT, 67056 Ludwigshafen (DE)
(72) Erfinder: Bruchmann, Bernd, Dr., 67251 Freinsheim (DE); Ehe, Ulrike, 67245 Lambsheim (DE); Wingerter, Frank, 67063 Ludwigshafen (DE); Stiefenhöfer, Konrad, 67280 Ebertsheim (DE); Treuling, Ulrich, Dr., 64625 Bensheim (DE)

(56) Entgegenhaltungen:
- WO-A-98/52995
- DE-A- 19 524 045
- US-A- 5 516 854

## Beschreibung

Die Erfindung betrifft dendrimere und hochverzweigte Polyurethane, ein Verfahren zu ihrer Herstellung sowie ihre Verwendung.

Dendrimere, Arborole, Starburst Polymers und Hyperbranched Polymers sind Bezeichnungen für polymere Strukturen, die sich durch eine verzweigte Struktur und eine hohe Funktionalität auszeichnen. Diese Strukturen sind für viele Klassen von polymeren Verbindungen, beispielsweise für Polyamine, Polyamide, Polyether, Polyester, Polyphenylene oder Polysiloxane in verschiedenen Varianten beschrieben. Eine umfassende Übersicht über dieses Gebiet wird beispielsweise in E. Malmström und A. Hult, J.M.S.-Rev. Macromol. Chem. Phys., 1997, C 37(3), 555-579 und in Dendritic Molecules, R. Newkome, C.N. Moorefield und F. Vögtle, Verlag Chemie, Weinheim 1996, gegeben.

Dendrimere und hochverzweigte Polyurethane besitzen in der Literatur derzeit nur eine geringe Bedeutung. Die Herstellung derartiger Verbindungen wird beispielsweise beschrieben in R. Spindler und J. M. J. Frechet, Macromolecules 1992, 4809 - 4813. In dem dort beschriebenen Verfahren werden hochverzweigte Polyurethane hergestellt durch intermolekulare Polyadditionsreaktion von Monomeren der allgemeinen Formel (I)

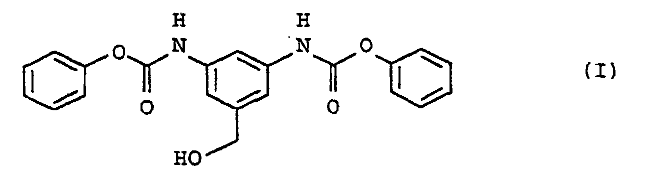

Dieses Monomer, das als mit Phenol verkappter 3,5-Diisocyanatobenzylalkohol anzusehen ist, wird in einer vierstufigen Reaktion aus 3,5-Dinitrobenzylalkohol mittels verschiedener Schutzgruppentechniken hergestellt. Bei Erwärmung spaltet sich Phenol ab und die Polyaddition der Monomeren (I) miteinander beginnt. Nachteilig an diesem Verfahren ist, daß das Monomer (I) nicht kommerziell zugänglich und die Herstellung der beschriebenen hochverzweigten Polyurethane somit sehr kostspielig ist, und daß die erforderliche Abspaltung von Phenol toxikologische und arbeitsplatzhygienische Probleme mit sich bringt.

A. Kumar und S. Ramakrishnan, J. Chem. Soc., Chem. Commun. 1993, 1453, beschreiben die Herstellung von hochverzweigten Polyurethanen über eine Eintopf-Synthese. Dabei wird zunächst ein Dihydroxybenzoylazid erzeugt, das thermisch unter Abspaltung von Stickstoff intermolekular polymerisiert. Auch das in diesem Verfahren beschriebene Monomer ist nicht kommerziell zugänglich und die Phenylurethane sind thermisch instabil, was die mögliche Verwendung der Produkte einschränkt. Darüber hinaus sind Azide schwierig herzustellen und zu handhaben.

In R. Spindler und J. M. J. Frechet, J. Chem. Soc., Perkin Trans. I, 1993, 913, wird eine Synthese von strukturell einheitlichen Polyurethanen beschrieben, bei der ausgehend von einem Diisocyanatobenzylchlorid und einem geschützten 3,5-Dihydroxybenzylalkohol Dendrimer-Äste aufgebaut und an einen mehrfunktionellen Alkohol als Kern angekoppelt werden. Auch die hier beschriebenen Monomere sind nicht kommerziell zugänglich, und die Herstellung der Dendrimere ist damit kostspielig.

R. T. Taylor und U. Puapaiboon, Tetrahedron Lett. 39 (1998) 8005, beschreiben eine Dendrimersynthese über eine Curtius-Reaktion. Dabei werden zunächst aus aromatischen Phenoldicarbonsäuren über Behandlung mit Alkohol und Diphenylphosphorylazid unter Anwendung von Schutzgruppentechniken dendritische Urethan-Äste erzeugt, die konvergent an ein Triurethan aus Benzoltricarbonsäure angekoppelt werden. Die Nachteile dieses Verfahrens sind die bereits oben genannten.

In WO 97/02304 wird ein Verfahren zur Herstellung von dendrimeren und hochverzweigten Polyurethanen beschrieben, bei dem in der Polyurethanchemie übliche Verbindungen als Ausgangsprodukte eingesetzt werden. Als Isocyanatkomponenten werden beispielsweise Diphenylmethandiisocyanat (MDI), Toluylendiisocyanat (TDI), p-Phenylendiisocyanat, Hexamethylendiisocyanat (HDI) oder Isophorondiisocyanat (IPDI) eingesetzt.Als Polyolkomponente kommen beispielsweise Glycerin, Trimethylolpropan (TMP) oder Pentaerythrit zum Einsatz. Zur Herstellung der Dendrimere werden in einem ersten Reaktionsschritt Monomere erzeugt, die eine NCO-Gruppe und zwei geschützte OH-Gruppen aufweisen. Nach Anlagerung dieser Monomere an ein OH- oder NH-Gruppen tragendes Startermolekül und Eritschützung der OH-Gruppen werden Polyurethan-Polyole erhalten, die durch divergenten (schalenförmigen) Aufbau zu dendrimeren Strukturen wachsen. Durch Modifikation dieses Reaktionsschemas lassen sich die Dendrimere auch nach der konvergenten Methode, das heißt Erzeugung der dendrimeren Äste und anschließende Ankopplung an einen Kern, herstellen. Mittels einer intermolekularen Reaktion lassen sich aus den genannten Monomeren auch hochverzweigte Polyurethane herstellen. Der wesentliche Nachteil dieses Verfahrens ist in der Anwendung der Schutzgruppen-Chemie zu sehen. Die Einführung und Abspaltung der Schutzgruppen macht dieses Verfahren umständlich und kostspielig.

Weitere Verfahren zur Herstellung von Polyurethan-Dendrimeren sind in WO-A-98 52 995, US-A-5516854 und DE-A-19524045 zu finden.

Aufgabe der Erfindung war es, ein einfaches Verfahren zur Herstellung von dendrimeren und hochverzweigten Polyurethanen zu entwickeln, das mit leicht zugänglichen Rohstoffen durchgeführt werden kann und das insbesondere unter Verzicht auf den Einbau von Schutzgruppen durchgeführt werden kann.

Die Aufgabe konnte überraschenderweise gelöst werden, indem die Unterschiede in der Reaktivität der Isocyanatgruppen von Di- oder Polyisocyanaten beziehungsweise der funktionellen Gruppen in den mit Isocyanaten reaktiven Verbindungen ausgenutzt werden, um einen selektiven Aufbau der Polymere zu steuern.

Gegenstand der Erfindung ist demzufolge ein Verfahren zur Herstellung von dendrimeren oder hochverzweigten Polyurethanen durch Umsetzung von bestimmten Diisocyanaten und/oder Polyisocyanaten mit Verbindungen mit mindestens zwei mit Isocyanaten reaktiven Gruppen, dadurch gekennzeichnet, daß mindestens einer der Reaktionspartner funktionelle Gruppen mit gegenüber dem anderen Reaktionspartner unterschiedlicher Reaktivität aufweist und die Reaktionsbedingungen so gewählt werden, daß bei jedem Reäktionsschritt jeweils bestimmte reaktive Gruppen miteinander reagieren.

Zumeist reagieren die jeweils reaktivsten Gruppen der Monomere miteinander beziehungsweise die reaktivsten Gruppen der Monomere mit den Endgruppen der Dendrimere.

Gegenstand der Erfindung sind weiterhin die nach diesem Verfahren hergestellten dendrimeren und hochverzweigten Polyurethane.

Unter dendrimeren Polyurethanen werden im Rahmen dieser Erfindung Makromoleküle mit Urethahgruppen verstanden, die strukturell und molekular einheitlich sind und, ausgehend von einem Kernmolekül, verzweigte Molekülketten aufweisen. Im Rahmen dieser Erfindung fallen auch die verzweigten Molekülketten selbst unter den Begriff dendrimere Polyurethane.

Unter hochverzweigten Polyurethanen werden im Rahmen dieser Erfindung unvernetzte Makromoleküle mit Urethangruppen verstanden, die sowohl strukturell als auch molekular uneinheitlich sind. Sie können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen.

Erfindungsgemäß einzusetzende Di- und/oder Polyisocyanate mit NCO-Gruppen unterschiedlicher Reaktivität sind 2,4-Toluylendiisocyanat (2,4-TDI), 2,4'-Diphenylmethandiisocyanat (2,4-MDI), Triisocyanatotoluol, Isophorondiisocyanat (IPDI), 2-Butyl-2-ethylpentamethylendiisocyanat, 2-Isocyanatopropylcyclohexylisocyanat, 2,4'-Methylenbis(cyclohexyl)diisocyanat und 4-Methyl-cyclohexan-1,3-diisocyanat (H-TDI).

Weiterhin können Isocyanate eingesetzt werden, deren NCO-Gruppen zunächst gleich reaktiv sind, bei denen sich jedoch durch Erstaddition eines Alkohols oder Amins an einer NCO-Gruppe ein Reaktivitätsabfall bei der zweiten NCO-Gruppe induzieren läßt. Zu nennen sind hier 1,3- und 1,4-Phenylendiisocyanat, 1,5-Naphthylendiisocyanat, Diphenyldiisocyanat, Tolidindiisocyanat oder 2,6-Toluylendiisocyanat.

Natürlich können auch Mischungen der genannten Isocyanate verwendet werden.

Als Verbindungen mit mindestens zwei mit Isocyanaten reaktiven Gruppen werden vorzugsweise di-, tri- oder tetrafunktionelle Verbindungen eingesetzt, deren funktionelle Gruppen gegenüber NCO-Gruppen eine unterschiedliche Reaktivität aufweisen. Bevor- . zugt sind Verbindungen mit mindestens einer primären und mindestens einer sekundären Hydroxylgruppe, mindestens einer Hydroxylgruppe und mindestens einer Mercaptogruppe, besonders bevorzugt mit mindestens einer Hydroxylgruppe und mindestens einer Aminogruppe im Molekül, insbesondere Aminoalkohole, Aminodiole und Aminotriole, da die Reaktivität der Aminogruppe gegenüber der Hydroxylgruppe bei der Umsetzung mit Isocyanat deutlich höher ist.

Beispiele für die genannten Verbindungen mit mindestens zwei mit Isocyanaten reaktiven Gruppen sind Propylenglykol, Glycerin, Mercaptoethanol, Ethanolamin, N-Methylethanol-amin, Diethanolamin, Ethanolpropaholamin, Dipropanolamin, Diisopropanolamin, 2-Amino-1, 3-propandiol, 2-Amino-2-methyl-1, 3-propandiol oder Tris(hydroxymethyl)-aminomethan.

Weiterhin sind auch Mischungen der genannten Verbindungen einsetzbar.

Um bei der Herstellung der dendrimeren Polyurethane genau definierte Strukturen zu erhalten, ist es notwendig, jeweils mindestens so viele Monomere zuzusetzen, daß jede freie funktionelle Gruppe des Polymeren abreagieren kann. Zu Beginn der Reaktion wird zumeist ein mehrfunktionelles Molekül, das als Startmolekül oder Initiatorkern bezeichnet wird, vorgelegt, an dessen funktionelle Gruppen je ein mit dieser funktionellen Gruppe reaktives Molekül angelagert wird. Danach erfolgt, falls erforderlich, die Abtrennung der nicht umgesetzten Monomere und eine Reinigung des Zwischenproduktes. Danach wird an jede freie funktionelle Gruppe des Zwischenproduktes wiederum je ein mehrfunktionelles Monomer angelagert, danach, soweit erforderlich, die Abtrennung der überschüssigen Monomeren und eine Reinigung durchgeführt, und so weiter verfahren, bis das gewünschte Molekulargewicht erreicht ist bzw. aus sterischen Gründen eine Anlagerung von weiteren Monomeren nicht mehr möglich ist. Die einzelnen Zwischenstufen werden auch als Generationen bezeichnet, wobei das durch Anlagerung von Monomeren an das Startmolekül entstandene Zwischenprodukt als nullte Generation, das nächste Zwischenprodukt als erste Generation, und so fort, bezeichnet wird. Auf Grund der unterschiedlichen Reaktivität der funktionellen Gruppen der eingesetzten Monomere ist gewährleistet, daß jeweils die reaktivsten funktionellen Gruppe mit den Endgruppen der Dendrimerketten reagieren und die weniger reaktiven funktionellen Gruppen der Monomere die funktionellen Endgruppen der nächsten Generation der dendrimeren Polyurethane bilden.

In einer bevorzugten Ausführungsform der Erfindung erfolgt die Herstellung der dendrimeren Polyurethane, indem man 1 Mol eines Diisocyanates mit zwei Mol eines Aminodiols zur nullten Generation des dendrimeren Polyurethans umsetzt. Die Temperatur bei der Umsetzung sollte dabei möglichst niedrig, vorzugsweise im Bereich zwischen -10 bis 30 °C, liegen. In diesem Temperaturbereich erfolgt eine praktisch vollständige Unterdrückung der Urethanbildungsreaktion, und die NCO-Gruppen des Isocyanates reagieren ausschließlich mit der Aminogruppe des Aminodiols. Im nächsten Reaktionsschritt reagieren die freien Hydroxylgruppen des addierten Aminodiols bei erhöhter Temperatur, vorzugsweise im Bereich zwischen 30 und 80 °C, selektiv mit der reaktiveren NCO-Gruppe des zugesetzten Isocyanats. Das resultierende dendrimere Polyurethan der ersten Generation besitzt als funktionelle Endgruppen die reaktionsträgeren NCO-Gruppen des zugesetzten Isocyanats. Diese werden wiederum, wie bei der Herstellung der nullten Generation des dendrimeren Polyurethans, bei niedriger Temperatur mit dem Aminodiol umgesetzt, und so fort. Die Umsetzung kann in Substanz oder in Lösungsmitteln ohne oder in Anwesenheit eines Urethanbildungskatalysators durchgeführt werden. Zwischen den Reaktionsstufen kann, soweit erforderlich, eine Abtrennung überschüssiger Monomere und/oder ein Reinigungsschritt erfolgen.

Auf diese Weise können dendrimere Polyurethane erzeugt werden, die bei jeder Generation ihre Funktionalität verdoppeln.

In analoger Weise können auch drei- und höherfunktionelle Isocyanate und Verbindungen mit vier oder mehr mit Isocyanaten reaktiven funktionellen Gruppen umgesetzt werden.

Zur Herstellung der hochverzweigten Polyurethane wird vorzugsweise zunächst ein Mol eines Diisocyanats mit einem Mol einer Verbindung mit mindestens zwei mit Isocyanatgruppen reaktiven Gruppen unterschiedlicher Reaktivität, vorzugsweise eines Aminodiols wie oben beschrieben, zu einer Verbindung umgesetzt, die sowohl freie Isocyanatgruppen als auch freie mit Isocyanatgruppen reaktiven Gruppen, vorzugsweise Hydroxylgruppen, enthält. Durch Erwärmung und/oder Katalysatorzugabe kann dieses Molekül intermolekular zu einem hochverzweigten Polyurethan reagieren. Die Reaktion kann, falls erforderlich, durch Zugabe einer monofunktionellen Verbindung oder durch weiteren Zusatz einer der beiden Reaktionspartner beendet werden. Die Reaktion kann jedoch auch bis zur vollständigen Abreaktion des Startmoleküls zur Erreichung sehr hochmolekularen Strukturen geführt werden.

In einer weiteren bevorzugten Ausführungsform des erfindungsgemäßen Verfahrens kann die Herstellung der hochverzweigten Polyurethane auch erfolgen, indem man zunächst ein Mol Diisocyanat mit zwei Mol Dialkanolamin reagieren läßt und zu diesem Reaktionsprodukt, einer tetrafunktionellen Verbindung mit einheitlicher Reaktivität, ein Mol Diisocyanat mit unterschiedlich reaktiven NCO-Gruppen hinzufügt. Bei dieser Umsetzung entsteht ebenfalls ein hochverzweigtes Polyurethan.

Falls erforderlich, lassen sich die funktionellen Gruppen der dendrimeren oder der hochverzweigten Polyurethane modifizieren oder inertisieren. So lassen sich NCO-terminierte Polymere beispielsweise mit Fettalkoholen, Fettaminen oder Acrylatgruppen enthaltenden Monoalkoholen, wie Hydroxyethylacrylat oder Hydroxyethylmethacrylat ganz oder teilweise umsetzen. Hydroxylterminierte Polymere lassen sich beispielsweise durch Umsetzung mit Monocarbonsäuren, beispielsweise Fettsäuren, oder Monoisocyanaten inertisieren und/oder durch Acrylsäuren funktionalisieren. Durch Addition von Alkylenoxiden, wie Ethylenoxid, Propylenoxid und/ oder Butylenoxid lassen sie sich kettenverlängern.

Durch Addition ionischer Verbindungen an die NCO-Gruppen oder an die mit NCO-Gruppen reaktiven Gruppen lassen sich auch wasserlösliche dendrimere oder hochverzweigte Strukturen erhalten. Die Umsetzung kann dabei jeweils ohne Lösungsmittel, vorzugsweise jedoch in Lösung erfolgen. Als Lösungsmittel sind alle bei Umsetzungstemperatur flüssigen, gegenüber den Monomeren und den Endprodukten inerten Verbindungen geeignet. Der Einsatz der erfindungsgemäßen dendrimeren und hochverzweigten Polyurethane erfolgt beispielsweise als Vernetzer für Polyurethansysteme oder als Baustein für andere Polyadditions- oder Polykondensationspolymere. Weitere Anwendungsmöglichkeiten sind in ihrem Einsatz als Phasenvermittler, Rheologiehilfsmittel, Thixotropiermittel, Nukleierungsreagenzien oder als Wirkstoffoder Katalysatorträger zu sehen.

Das erfindungsgemäße Verfahren erlaubt es, dendrimere und hochverzweigte Polyurethane aus gut zugänglichen Polyurethan-Rohstoffen auf einfachem Wege, insbesondere unter Verzicht auf die aufwendige Einführung von Schutzgruppen, herzustellen.

Das erfindungsgemäße Verfahren soll an den folgenden Beispielen näher erläutert werden.

### Beispiel 1 - Herstellung eines dendrimeren Polyurethans

### 1a) Herstellung des NCO-funktionellen Startmoleküls

1 Mol 2,4-TDI wurden in 500 ml getrocknetem Toluol gelöst. Bei einer Temperatur von 20 °C wurden im Laufe einer Stunde 0,33 Mol Hexandiol, gelöst in 50 ml getrocknetem Tetrahydrofuran (THF), zugetropft. Nach Ende der Dosierung ließ man die Reaktionsmischung eine Stunde nachreagieren. Der entstanden Feststoff wurde abgesaugt, mit Toluol gewaschen und unter Vakuum getrocknet. Das Umsetzungsprodukt hatte eine NCO-Funktionalität von 2 und wies folgende Parameter auf:

| | |
|---|---|
| Ausbeute | 80% |
| Schmelzpunkt | 134 °C |
| NCO-Gehalt | 18,0 Gew.-% |
| Molmasse | 466,5 g/mol |

### 1b) Herstellung der ersten Generation des dendrimeren Polyurethans (Hydroxylfunktionell)

0,2 Mol Diethanolamin wurden in 200 ml trockenem THF vorgelegt. Bei 20 °C wurden 0,1 Mol des Startermoleküls aus Beispiel 1a, gelöst in 400 ml trockenem THF, innerhalb einer Stunde zugetropft. Nach beendeter Zugabe wurde noch drei Stunden gerührt und der Ansatz danach über Nacht stehen gelassen. Der entstanden weiße Feststoff wurde abgesaugt, mit THF gewaschen und bei 80 °C im Vakuum getrocknet. Das Umsetzungsprodukt hatte eine Hydroxylfunktionalität von 4 und wies folgende Parameter auf:

| | |
|---|---|
| Ausbeute | 70 % |
| Schmelzpunkt | 155 °C |
| Molmasse | 678,8 g/mol |

### 1c) Herstellung der ersten Generation des dendrimeren Polyurethans (NCO-funktionell)

0,4 Mol 2,4-TDI wurden in 100 ml trockenem N-Methylpyrrolidon (NMP) vorgelegt und bei 20 °C 0,1 Mol des Produkts aus Beispiel 1b), gelöst in 500 ml THF, innerhalb von 30 Minuten zugegeben. Die Reaktionsmischung wurde gerührt, bis eine klare Lösung vorlag, und danach das THF am Rotationsverdampfer entfernt. Der NMP-haltige Rückstand wurde in 100 ml Diethylether aufgenommen, verrieben und der entstandene Feststoff nochmals mit 100 ml Diethylether gewaschen. Anschlie- . ßend wurde er im Vakuum bei 80 °C getrocknet. Das Umsetzungsprodukt hatte eine NCO-Funktionalität von 4 und wies folgende Parameter auf:

| | |
|---|---|
| Ausbeute | 95 % |
| Erweichungspunkt | 57 °C |
| NCO-Gehalt | 12,2 Gew.-% |
| Molmasse | 1373, 4 g/mol |

### 1d) Herstellung der zweiten Generation des dendrimeren Polyurethans (Hydroxylfunktionell)

0,4 Mol Diethanolamin wurden in 300 ml trockenem THF vorgelegt und bei 20 °C 0,1 Mol des Produkts aus Beispiel 1c), gelöst in 600 ml THF, innerhalb von einer Stunde zugetropft. Das Reaktionsprodukt fiel sofort aus. Die Reaktionsmischung wurde noch eine Stunde gerührt und das überstehende THF dekantiert. Das verbleibende Produkt wurde mit 500 ml heißem THF aufgekocht und die überstehende Lösung verworfen. Das entstandene Produkt wurde ohne Reinigung weiterverarbeitet. Die Molmasse des entstandenen Produkts betrug 1794 g/mol und wies eine OH-Funktionalität von 8 auf. Die Ausbeute betrug 95 %.

### 1e) Herstellung der zweiten Generation des dendrimeren Polyurethans (NCO-funktionell)

0,8 Mol 2,4-TDI, gelöst in 150 ml THF, wurden vorgelegt und bei 20 °C 0,5 Mol des Produkts nach Beispiel 1d), gelöst in 50 ml NMP, innerhalb von einer Stunde zugetropft. Man ließ 3 Stunden bei 20 °C nachreagieren und zog danach das THF am Rotationsverdampfer unter Vakuum ab. Der NMP-haltige Rückstand wurde mit 200 ml Dimethylether versetzt, verrieben und die überstehende Lösung dekantiert. Anschließend wurde dieser Vorgang mit 200 ml heißem Toluol wiederholt, der Feststoff abgesaugt und bei 80 °C im Vakuum getrocknet. Das ReaktionsProdukt hatte eine NCO-Funktionalität von 8 und wies folgende Parameter auf:

| | |
|---|---|
| Ausbeute | 78% |
| Erweichungspunkt | 75 °C |
| NCO-Gehalt | 10,5 Gew.-% |
| Molmasse | 3187, 3 g/mol |

### Beispiel 2 - Herstellung eines hochverzweigten Polyurethans (Hydroxylfunktionell)

Ein Mol IPDI wurde in 300 ml trockenem THF gelöst und auf 10 °C abgekühlt. Anschließend wurde bei dieser Temperatur innerhalb von 30 Minuten 1 Mol Diethanolamin, gelöst in 100 ml THF, zugegeben. Nach beendeter Zugabe wurde die Reaktionsmischung 30 Minuten bei 10 °C gerührt, danach die Reaktionsmischung auf 65 °C erwärmt und 100 ppm Dibutylzinndilaurat zugegeben. Es wurde bei 65 °C gerührt, bis nach ca. 90 Minuten eine Eintrübung, hervorgerufen durch das entstandene Polymer, sichtbar wurde. Danach wurde die Reaktion durch Zugabe von 0.1 Mol Diethanolamin, gelöst in THF, abgebrochen. Das entstandene hochverzweigte Polyurethan wies nach Entfernung des Lösemittels folgende Parameter auf:
Hydroxylzahl: 250 mg KOH/g
GPC-Analytik (PMMA-Eichung)
Molgewicht M_{w}: 258000
Molgewicht Mₙ: 5600

### Beispiel 3 - Herstellung eines hochverzweigten Polyurethans (Hydroxylfunktionell)

1 Mol Diethanolamin wurde in 300 ml trockenem THF gelöst und auf 10 °C abgekühlt. Anschließend wurde bei dieser Temperatur innerhalb von 30 Minuten 1 Mol IPDI, gelöst in 100 ml THF, zugegeben. Unmittelbar nach Beginn der Dosierung trübte sich die Lösung ein, und es entstand eine Suspension. Nach beendeter Zugabe wurde die Reaktionsmischung 30 Minuten bei 10 °C gerührt, danach die Reaktionsmischung auf 65 °C erwärmt und 100 ppm Dibutylzinndilaurat zugesetzt. Danach wurde die Lösung klar. Die Lösung wurde bei 65 °C gerührt bis nach etwa 90 Minuten eine Eintrübung, hervorgerufen durch das entstandene Polymer, sichtbar wurde. Die Reaktion wurde durch die Zugabe von 0.1 Mol Diethanolamin, gelöst in THF, abgebrochen. Das entstandene hochverzweigte Polyurethan wies nach Entfernung des Lösemittels folgende Parameter auf:
Hydroxylzahl: 280 mgKOH/g
GPC-Analytik (PMMA-Eichung)
Molgewicht M_{w}: 147000
Molgewicht Mₙ: 5300

### Beispiel 4 - Herstellung eines hochverzweigten Polyurethans (Hydroxylfunktionell)

1 Mol 2,4-TDI wurde in 300 ml trockenem THF gelöst und auf 0 °C abgekühlt. Anschließend wurde bei dieser Temperatur innerhalb von 30 Minuten 1 Mol Ethanolpropanolamin, gelöst in 100 ml THF, zugegeben. Nach beendeter Zugabe wurde die Reaktionsmischung auf 23°C erwärmt und 30 Minuten bei dieser Temperatur gerührt. Danach wurde die Reaktion durch die Zugabe von 0.1 Mol Ethanolpropanolamin, gelöst in THF, abgebrochen. Das entstandene hochverzweigte Polyurethan wies nach Entfernung des Lösemittels folgende Parameter auf:
Hydroxylzahl: 290 mgKOH/g
GPC-Analytik (PMMA-Eichung)
Molgewicht M_{w}: 8600
Molgewicht Mₙ: 3600

### Beispiel 5 - Herstellung eines hochverzweigten Polyurethans (NCO-funktionell)

1 Mol Glycerin wurde in 300 ml trockenem DMF gelöst und die Lösung auf -10 °C abgekühlt. Anschließend wurde bei dieser Temperatur innerhalb von 30 Minuten 2 Mol 2,4-TDI, gelöst in 300 ml DMF, zugegeben. Nach beendeter Zugabe wurde die Reaktionsmischung auf 23°C erwärmt und 60 Minuten bei dieser Temperatur gerührt. Danach wurde die Reaktion durch die Zugabe von 0.1 Mol 2, 4-TDI, gelöst in DMF, abgebrochen. Das entstandene hochverzweigte Polyurethan wies nach Entfernung des Lösemittels folgende Parameter auf:
NCO-Gehalt: 13.4 Gew.%
GPC-Analytik (PMMA-Eichung)
Molgewicht M_{w}: 7300
Molgewicht Mₙ: 2600

## Patentansprüche

1. Verfahren zur Herstellung von dendrimeren oder hochverzweigten Polyurethanen durch Umsetzung von Diisocyanaten und/ oder Polyisocyanaten mit Verbindungen mit mindestens zwei mit Isocyanaten reaktiven Gruppen, **dadurch gekennzeichnet, daß** mindestens einer der Reaktionspartner funktionelle Gruppen mit gegenüber dem anderen Reaktionspartner unterschiedlicher Reaktivität aufweist und die Reaktionsbedingungen so gewählt werden, daß bei jedem Reaktionsschritt jeweils nur bestimmte reaktive Gruppen miteinander reagieren, und die Diisocyanate ausgewählt sind aus der Gruppe, enthaltend 2,4-Toluylendiisocyanat, 2,6-Toluylendiisocyanat, 2,4-Diphenylmethandiisocyanat, Triisocyanatotoluol, 1,3- und 1,4-Phenylendiisocyanat, 1,5-Naphthylendiisocyanat, Tolidindiisocyanat, Diphenyldiisocyanat, Isophorondiisocyanat, 2-Butyl-2-ethylpentamethylen-diisocyanat, 2-Isocyanatopropylcyclohexylisocyanat, 4-Methyl-cyclohexan-1,3-diisocyanat, 2,4'-Methylenbis(cyclohexyl)diisocyanat oder aus deren Mischungen.

2. Verfahren zur Herstellung von dendrimeren Polyurethanen nach Anspruch 1, **dadurch gekennzeichnet, daß** man an die funktionellen Gruppen eines mehrfunktionellen Moleküls mit mindestens zwei Isocyanatgruppen oder mit mindestens zwei mit Isocyanatgruppen reaktiven Gruppen je ein Molekül mit mindestens zwei mit Isocyanatgruppen reaktiven Gruppen oder mit mindestens zwei Isocyanatgruppen unterschiedlicher Reaktivität anlagert, an die freien reaktiven Gruppen des entstandenen Moleküls wiederum je ein Molekül mit mindestens zwei mit den freien reaktiven Gruppen reaktive Gruppen mit unterschiedlicher Reaktivität anlagert, und so fort, bis die erwünschte Molekularmasse erreicht ist oder die weitere Anlagerung aus sterischen Gründen nicht mehr möglich ist.

3. Verfahren zur Herstellung von dendrimeren oder hochverzweigten Polyurethanen nach Anspruch 1, **dadurch gekennzeichnet, daß** die Verbindungen mit mindestens zwei mit Isocyanatgruppen reaktiven Gruppen Verbindungen mit mindestens einer primären und mindestens einer sekundären Hydroxylgruppe oder mindestens einer Hydroxylgruppe und mindestens einer Mercaptogruppe oder mindestens einer Hydroxylgruppe und mindestens einer Aminogruppe im Molekül sind.

4. Verfahren zur Herstellung von hochverzweigten Polyurethanen nach Anspruch 1, **dadurch gekennzeichnet, daß** ein Mol eines Isocyanats mit einem Mol einer Verbindung mit mindestens zwei mit Isocyanatgruppen reaktiven Gruppen unterschiedlicher Reaktivität umgesetzt wird und die entstandene Verbindung, die sowohl freie Isocyanatgruppen als auch freie mit Isocyanatgruppen reaktiven Gruppen enthält, intermolekular zu einem hochverzweigten Polyurethan reagiert.

5. Verfahren zur Herstellung von hochverzweigten Polyurethanen nach Anspruch 1, **dadurch gekennzeichnet, daß** ein Mol eines Diisocyanats mit einem Mol einer tetrafunktionellen, mit Isocyanat reaktiven Verbindung umgesetzt wird und die entstandene Verbindung, die sowohl freie Isocyanatgruppen als auch freie mit Isocyanatgruppen reaktive Gruppen enthält, intermolekular zu einem hochverzweigten Polyurethan reagiert.

6. Verfahren zur Herstellung von hochverzweigten Polyurethanen nach Anspruch 1, **dadurch gekennzeichnet, daß** zwei Mol eines Diisocyanats mit einem Mol einer trifunktionellen Verbindung mit gegenüber Isocyanatgruppen unterschiedlicher Reaktivität umgesetzt werden, und die entstandene Verbindung, die sowohl freie Isocyanatgruppen als auch freie mit Isocyanatgruppen reaktiven Gruppen enthält, intermolekular zu einem hochverzweigten Polyurethan reagiert.

7. Dendrimere Polyurethane, herstellbar nach einem der Ansprüche 1 bis 3.

8. Hochverzweigte Polyurethane, herstellbar nach einem der Ansprüche 1 bis 6.

9. Verwendung der dendrimeren oder hochverzweigten Polyurethane nach Anspruch 1 - 8 als Komponente zur Herstellung von Polyadditions- oder Polykondensationspolymeren.

10. Verwendung der dendrimeren oder hochverzweigten Polyurethane nach Anspruch 1 bis 9 als Phasenvermittler, Rheologiehilfsmittel, Thixotropiermittel, Nukleierungsreagenzien oder als Wirkstoff- oder Katalysatorträger.

## Claims

1. A process for preparing dendritic or highly branched polyurethanes by reacting diisocyanates and/or polyisocyanates with compounds containing at least two groups which are reactive toward isocyanates, wherein at least one of the reactants contains functional groups having a different reactivity compared to the other reactant and the reaction conditions are selected so that only certain reactive groups react with one another in each reaction step and the diisocyanates are selected from the group consisting of tolylene 2,4-diisocyanate, tolylene 2,6-diisocyanate, diphenylmethane 2,4-diisocyanate, triisocyanatotoluene, phenylene 1,3- and 1,4-diisocyanate, naphthylene 1,5-diisocyanate, tolidine diisocyanate, biphenyl diisocyanate, isophorone diisocyanate, 2-butyl-2-ethylpentamethylene diisocyanate, 2-isocyanatopropylcyclohexyl isocyanate, 4-methylcyclohexyl 1,3-diisocyanate, dicyclohexylmethane 2,4'-diisocyanate and mixtures thereof.

2. A process for preparing dendritic polyurethanes as claimed in claim 1, which comprises adding a molecule containing at least two groups which are reactive toward isocyanate groups or containing at least two isocyanate groups of differing reactivity onto each of the functional groups of a polyfunctional molecule containing at least two isocyanate groups or containing at least two groups which are reactive toward isocyanate groups, then adding a molecule containing at least two groups which are reactive toward the free reactive groups and have differing reactivity onto the free reactive groups of the resulting molecule, and so forth until the desired molar mass has been reached or a further addition reaction is no longer possible for stearic reasons.

3. A process for preparing dendritic or highly branched polyurethanes as claimed in claim 1, wherein the compounds having at least two groups which are reactive toward isocyanate groups are compounds having at least one primary and at least one secondary hydroxyl group or at least one hydroxyl group and at least one mercapto group or at least one hydroxyl group and at least one amino group in the molecule.

4. A process for preparing highly branched polyurethanes as claimed in claim 1, which comprises reacting one mole of an isocyanate with one mole of a compound containing at least two groups which are reactive toward isocyanate groups and have differing reactivity and reacting the resulting compound which contains both free isocyanate groups and free groups which are reactive toward isocyanate groups intermolecularly to form a highly branched polyurethane.

5. A process for preparing highly branched polyurethanes as claimed in claim 1, which comprises reacting one mole of a diisocyanate with one mole of a tetrafunctional compound which is reactive toward isocyanates and reacting the resulting compound which contains both free isocyanate groups and free groups which are reactive toward isocyanate groups intermolecularly to form a highly branched polyurethane.

6. A process for preparing highly branched polyurethanes as claimed in claim 1, which comprises reacting two mole of a diisocyanate with one mole of a trifunctional compound containing groups which are reactive toward isocyanate groups and have differing reactivity and reacting the resulting compound which contains both free isocyanate groups and free groups which are reactive toward isocyanate groups intermolecularly to form a highly branched polyurethane.

7. A dendritic polyurethane which can be prepared as claimed in any of claims 1 to 3.

8. A highly branched polyurethane can be prepared as claimed in any of claims 1 to 6.

9. The use of dendritic or highly branched polyurethanes as claimed in any of claims 1 - 8 as a component for preparing polyaddition or polycondensation polymers.

10. The use of dendritic or highly branched polyurethanes as claimed in any of claims 1 to 9 as phase compatibilizers, rheological auxiliaries, thixotropes, nucleating agents or as catalyst supports or carriers for active compounds.

## Revendications

1. Procédé de préparation de polyuréthannes dendrimères ou hautement ramifiés par réaction de diisocyanates et/ou de polyisocyanates avec des composés comportant au moins deux groupes réactifs vis-à-vis des isocyanates, **caractérisé en ce qu'**au moins l'un des partenaires de réaction présente des groupes fonctionnels ayant des réactivités différentes vis-à-vis de l'autre partenaire de réaction et que les conditions de réaction sont choisies de manière qu'à chaque étape de réaction, seuls certains groupes réactifs réagissent entre eux, et que les diisocyanates sont choisis dans le groupe comportant le diisocyanate de 2,4-toluylène, le diisocyanate de 2,6-toluylène, le diisocyanate de 2,4-diphénylméthane, le triisocyanatotoluène, le diisocyanate de 1,3- et 1,4-phénylène, le diisocyanate de 1,5-naphtylène, le diisocyanate de tolidine, le diisocyanate de diphényle, le diisocyanate d'isophorone, l'isocyanate de 2-butyl-2-éthylpentaméthylène, le diisocyanate de 2-isocyanatopropylcyclohexyle, le 1,3-diisocyanate de 4-méthylcyclohexane, le diisocyanate de 2,4'-méthylène-bis(cyclohexyle), ou leurs mélanges.

2. Procédé de préparation de polyuréthannes dendrimères selon la revendication 1, **caractérisé en ce que** l'on additionne, sur les groupes fonctionnels d'une molécule polyfonctionnelle comportant au moins deux groupes isocyanate ou au moins deux groupes réactifs vis-à-vis de groupes isocyanate, à chaque fois une molécule comportant au moins deux groupes réactifs vis-à-vis de groupes isocyanate ou au moins deux groupes isocyanate de réactivités différentes, que sur les groupes réactifs libres de la molécule formée on additionne à nouveau à chaque fois une molécule comportant au moins deux groupes réactifs vis-à-vis des groupes réactifs libres et de réactivités différentes, etc., jusqu'à obtention de la masse moléculaire souhaitée ou qu'une autre addition ne soit plus possible pour des raisons stériques.

3. Procédé de préparation de polyuréthannes dendrimères ou hautement ramifiés selon la revendication 1, **caractérisé en ce que** les composés comportant au moins deux groupes réactifs vis-à-vis de groupes isocyanate sont des composés comportant au moins un groupe hydroxyle primaire et au moins un secondaire, ou au moins un groupe hydroxyle et au moins un groupe mercapto, ou au moins un groupe hydroxyle et au moins un groupe amino par molécule.

4. Procédé de préparation de polyuréthannes hautement ramifiés selon la revendication 1, **caractérisé en ce que** l'on fait réagir une mole d'un isocyanate avec une mole d'un composé comportant au moins deux groupes réactifs vis-à-vis de groupes isocyanate et de réactivités différentes, et que le composé formé, qui contient à la fois des groupes isocyanate libres et des groupes libres réactifs vis-à-vis de groupes isocyanate, réagit au niveau intermoléculaire pour former un polyuréthanne hautement ramifié.

5. Procédé de préparation de polyuréthannes hautement ramifiés selon la revendication 1, **caractérisé en ce que** l'on fait réagir une mole d'un diisocyanate avec une mole d'un composé tétrafonctionnel réactif vis-à-vis de l'isocyanate, et que le composé formé, qui contient à la fois des groupes isocyanate libres et des groupes libres réactifs vis-à-vis de groupes isocyanate, réagit au niveau intermoléculaire pour former un polyuréthanne hautement ramifié.

6. Procédé de préparation de polyuréthannes hautement ramifiés selon la revendication 1, **caractérisé en ce que** l'on fait réagir deux moles d'un diisocyanate avec une mole d'un composé trifonctionnel comportant des groupes de réactivités différentes vis-à-vis de groupes isocyanate, et que le composé formé, qui contient à la fois des groupes isocyanate libres et des groupes libres réactifs vis-à-vis de groupes isocyanate, réagit au niveau intermoléculaire pour former un polyuréthanne hautement ramifié.

7. Polyuréthannes dendrimères, que l'on peut préparer selon l'une quelconque des revendications 1 à 3.

8. Polyuréthannes hautement ramifiés, que l'on peut préparer selon l'une quelconque des revendications 1 à 6.

9. Utilisation des polyuréthannes dendrimères ou hautement ramifiés selon les revendications 1 à 8 comme composants pour la préparation de polymères de polyaddition ou de polycondensation.

10. Utilisation des polyuréthannes dendrimères ou hautement ramifiés selon les revendications 1 à 9 comme médiateurs de phase, adjuvants rhéologiques, agents thixotropes, agents de nucléation ou supports d'agent actif ou de catalyseur.
